# EUROPÄISCHE PATENTSCHRIFT

(11) **EP 0 529 377 B1**
(45) Veröffentlichungstag und Bekanntmachung des Hinweises auf die Patenterteilung: **07.02.1996**
(21) Anmeldenummer: 92113538.0
(22) Anmeldetag: 08.08.1992
(51) Int. Cl.: C08F 10/00

(54) **Mit Aluminiumphosphat geträgerte Ziegler-Natta-Katalysatorsysteme**
Ziegler-Natta catalyst supported on AIPO4
Ziegler-Natta catalyseur supporté à d'aluminium de phosphate

(30) Priorität: 24.08.1991 DE 4128134
(43) Veröffentlichungstag der Anmeldung: 03.03.1993
(73) Patentinhaber: BASF Aktiengesellschaft, D-67063 Ludwigshafen (DE)
(72) Erfinder: Kersting, Meinolf, Dr., W-6702 Bad Duerkheim (DE); Mueller, Patrik, Dr., W-6750 Kaiserslautern (DE); Schwager, Harald, Dr., W-6720 Speyer (DE); Koelle, Peter, Dr., W-6700 Ludwigshafen (DE); Weber, Siegfried, Dr., W-6940 Weinheim (DE); Mueller, Hans-Joachim, Dr., W-6718 Gruenstadt (DE)

(56) Entgegenhaltungen:
- EP-A- 0 215 336
- EP-A- 0 421 197
- US-A- 4 499 199
- US-A- 4 857 613

## Beschreibung

Die vorliegende Erfindung betrifft Katalysatorsysteme zur Polymerisation von C₂- bis C₁₀-Alk-1-enen, enthaltend als aktive Bestandteile
a) eine Feststoffkomponente auf der Basis einer Verbindung des drei- oder vierwertigen Titans, eines Halogens, einer Elektronendonorverbindung, einer magnesiumhaltigen Verbindung und einem Träger,
b) eine Aluminiumkomponente und
c) gegebenenfalls eine weitere Elektronendonorverbindung,
wobei als Träger in der Feststoffkomponente a) eine Aluminiumphosphatverbindung mit einem atomaren Verhältnis von Aluminium zu Phosphor von 0,5 bis 1,5 verwendet wird.

Außerdem betrifft die vorliegende Erfindung die Herstellung solcher Katalysatorsysteme und die Herstellung von Polymerisaten von C₂- bis C₁₀-Alk-1-enen.

Zur Polymerisation von C₂- bis C₁₀-Alk-1-enen stehen mittlerweile eine ganze Reihe verschiedenartiger Methoden zur Verfügung, die mit wenigen Ausnahmen alle auf einer durch Metallverbindungen katalysierten Polymerisationsreaktion beruhen.

In der EP-A 421 197 wird ein Katalysatorsystem zur Polymerisation von Propylen beschrieben, welches als wesentliche Komponente u.a. eine auf Siliciumoxid bzw. Aluminiumoxid geträgerte titanhaltige Feststoffkomponente aufweist. Nach einem in der US-A 4 499 199 beschriebenes Verfahren läßt sich Ethylen mit Hilfe eines Katalysatorsystems aus einer Magnesiumverbindung, einer Titanverbindung und einer Zinnverbindung polymerisieren.

Aus der EP-A 215 336, der US-A 4 219 444 und der US-A 4 622 371 ist beispielsweise ein Katalysatorsystem auf der Basis einer Chromverbindung und eines Aluminiumphosphates bekannt. Dieses Katalysatorsystem wird speziell zur Polymerisation von Ethylen verwendet. Auf diese Weise lassen sich Polyethylene mit einer hohen Dichte herstellen. Derartige Katalysatorsysteme sind jedoch im wesentlichen auf die Polymerisation von Ethylen beschränkt und weisen darüber hinaus keine hohe Produktivität auf. Darunter versteht man das Verhältnis der gebildeten Menge an Polymerisat zur Menge des dabei eingesetzten Katalysators.

Die Polymerisation von C₂- bis C₁₀-Alk-1-enen wird häufig auch mit Hilfe von Ziegler-Natta-Katalysatoren durchgeführt. Derartige Katalysatoren sind beispielsweise aus der EP-B 14 523, der EP-A 23 425, der EP-A 45 975, der EP-A 195 497 und der US-A 4 857 613 bekannt. Diese Systeme enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits zusammen mit der Titanverbindung und andererseits als Cokatalysator verwendet werden. Bei einigen dieser Katalysatorsysteme werden die dabei eingesetzten Titanverbindungen geträgert, wobei als Trägermaterialien in der Regel feinkörnige Oxide des Siliciums oder des Aluminiums eingesetzt werden.

Um eine wirtschaftliche Polyolefinproduktion zu gewährleisten, müssen solche Katalysatorsysteme u.a. eine hohe Produktivität aufweisen.

Weiterhin ist es erforderlich, daß die dabei erhältlichen Polymerisate möglichst kristallin und stereoregulär sind, d.h. der Anteil von in Xylol oder in n-Heptan löslichen Polymerisaten sollte möglichst niedrig liegen. Für die Verarbeitung derartiger Polymerisate ist es außerdem notwendig, daß diese neben einer engen Korngrößenverteilung auch einen möglichst geringen Feinstkornanteil aufweisen, der häufig die Ursache für Verstopfungen in den dem Reaktor nachgeschalteten Anlageteilen ist.

Diese beiden Zielvorgaben lassen sich nach dem Stand der Technik zusammen nur bedingt verwirklichen. So ist beispielsweise aus der EP-A 86 473 ein Ziegler-Natta-Katalysatorsystem bekannt, das zwar eine befriedigend hohe Produktivität aufweist, im Hinblick auf die Stereoregularität der entstehenden Polymerisate aber zu wünschen übrig läßt. In der EP-A 171 200 wird ferner ein Ziegler-Natta-Katalysatorsystem beschrieben, das eine auf Siliciumoxid beträgerte Titanverbindung als Katalysatorkomponente, sowie Silicium- und Aluminunverbindungen als Cokatalysatoren enthält. Dieses Katalysatorsystem ermöglicht die Herstellung von Polypropylenen mit hoher Stereospezifität, weist aber neben einer nicht mehr befriedigenden Produktivität den weiteren Nachteil auf, daß die Kornverteilung des hierbei erhältlichen Polymerisats zu breit ist.

In der US-A 4 857 613 wird ein Katalysatorsystem beschrieben, das als wesentlichen Bestandteil ein auf Kieselgel geträgertes Gemisch aus einer Titanverbindung, einem Halogen, einer Magnesiumverbindung und einem Benzolcarbonsäurederivat aufweist. Dabei werden Aluminiumverbindungen und organische Siliciumverbindungen als Cokatalysatoren verwendet. Dieses Katalysatorsystem ermöglicht die Herstellung von Polyolefinen mit hoher Stereospezifität und geringen Katalysatorresten und weist zudem eine hohe Produktivität auf. Die dabei erhaltenen Polymerisate sind jedoch gelegentlich nicht ganz frei von einem gewissen Feinstkornanteil, was insbesondere bei kontinuierlichem Betrieb zu Störungen, beispielsweise Verstopfungen in den, dem Reaktor nachgeschalteten Anlageteilen führen kann.

Der vorliegenden Erfindung lag daher als Aufgabe die Entwicklung eines neuen Katalysatorsystems zugrunde, mit dem den geschilderten Nachteilen weitestgehend abgeholfen werden kann und mit dem es möglich ist, Polymerisate von C₂- bis C₁₀-Alk-1-enen mit hoher Produktivität herzustellen, die sich durch eine hohe Kristallinität und eine gute Morphologie, insbesondere durch einen geringen Feinstkornanteil auszeichnen.

Demgemäß wurden die in den Patentansprüchen aufgeführten neuen Katalysatorsysteme gefunden.

Zur Herstellung der erfindungsgemäß einzusetzenden Feststoffkomponente a) werden als Titanverbindungen im allgemeinen Halogenide oder Alkoholate des drei- oder vierwertigen Titans verwendet, wobei die Chloride des Titans, insbesondere Titantetrachlorid, bevorzugt sind. Daneben enthält die Feststoffkomponente ein Halogen, bevorzugt Chlor oder Brom, welches entweder in elementarer Form oder in Form eines Halogenierungsmittels, beispielsweise als Halogenwasserstoffsäure oder als Siliciumtetrahalogenid, eingebracht wird.

Weiterhin werden bei der Herstellung der Feststoffkomponente a) u.a. Verbindungen des Magnesiums eingesetzt. Als solche kommen neben Magnesiumhalogeniden, Magnesiumalkylen und Magnesiumarylen auch Magnesiumalkoxy- und Magnesiumaryloxyverbindungen in Betracht, wobei insbesondere Magnesiumdichlorid, Magnesiumdibromid und Magnesiumdi-(C₁-C₁₀-alkyl)-Verbindungen verwendet werden.

Neben den drei- oder vierwertigen Titanverbindungen, dem Halogen und der Magnesiumverbindung enthält die Feststoffkomponente a) noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der Feststoffkomponente a) Phthalsäurederivate der allgemeinen Formel I 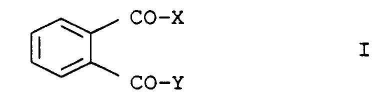
verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y einen C₁- bis C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁- bis C₁₀-Alkylderivate dieser Verbindungen.

Das erfindungsgemäße Katalysatorsystem enthält als Träger der Feststoffkomponente a) eine Aluminiumphosphatverbindung mit einem atomaren Verhältnis von Aluminium zu Phosphor von 0,5 bis 1,5, insbesondere von 0,8 bis 1,2. Besonders bevorzugt sind dabei solche Aluminiumphosphatverbindungen, deren atomares Verhältnis von Aluminium zu Phosphor bei 0,9 bis 1,1 liegt. Für das erfindungsgemäße Katalysatorsystem hat sich insbesondere das Aluminiumsalz der Monophosphorsäure, AlPO₄, gut bewährt.

Die bevorzugt verwendeten Träger weisen einen Teilchendurchmesser von 0,1 bis 1000 µm. ein Porenvolumen von 0,1 bis 10 cm³/g, insbesondere 0,5 bis 2,5 g/cm³ und besonders bevorzugt 0,7 bis 1,8 cm³/g und eine spezifische Oberfläche von 10 bis 1000 m²/g, insbesondere von 20 bis 500 m²/g auf.

Die erfindungsgemäß einzusetzenden Träger aus Aluminiumphosphat können nach an sich bekannten Methoden hergestellt werden. Eine bevorzugte Herstellungsmethode beruht auf der Neutralisation einer wäßrigen Aluminiumsalzlösung mit Phosphorsäure oder einem aciden Phosphat, beispielsweise Ammoniumphosphat. Nach einer anderen Herstellungsvariante ist es auch möglich, als Träger Mischungen von Aluminiumphosphat mit untergeordneten Mengen anderer Phosphate, beispielsweise Eisenphosphat, oder mit untergeordneten Mengen von Orthokieselsäureestern oder Borverbindungen zu verwenden. Beispiele für derartige Aluminiumphosphatträger sind u.a. in der EP-A 215 336, der US-A 4 219 444 und der US-A 4 622 371 beschrieben.

Die Feststoffkomponente a) kann ebenfalls nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der Feststoffkomponente a) wird bevorzugt folgendes zweistufige Verfahren angewandt.

In der ersten Stufe versetzt man zunächst das als Träger verwendete Aluminiumphosphat mit einer Lösung einer magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 Mol der Magnesiumverbindung ein. Anschließend fügt man unter ständigem Rühren diesem Gemisch ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Danach gibt man ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 Mol, insbesondere 2 bis 4 Mol, Alkanol, 2 bis 20 Mol, insbesondere 4 bis 10 Mol, des drei- oder vierwertigen Titans und 0,01 bis 1 Mol, insbesondere 0,1 bis 1,0 Mol, der Elektronendonorverbindung ein. Die Lösung wird mindestens eine Stunde lang bei einer Temperatur zwischen 10 und 150°C gerührt, der so erhaltene feste Stoff anschließend abfiltriert und mit einem flüssigen Kohlenwasserstoff, beispielsweise einem C₇- bis C₁₀-Alkylbenzol wie Ethylbenzol, oder einem flüssigen Alkan, bevorzugt Hexan oder Heptan, gewaschen.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel mindestens 5 Gew.-% Titantetrachlorid enthält. Danach wäscht man das Produkt solange mit einem flüssigen Alkan, bis der Gehalt der Waschflüssigkeit an Titantetrachlorid geringer ist als 2 Gew.-%.

Bei diesem bevorzugt angewandten Herstellungsverfahren ist es auch möglich, den aus der ersten Stufe erhaltenen Feststoff dann dem Extraktionsschritt der zweiten Stufe zu unterwerfen, wenn dieser noch teilweise in einem flüssigen Alkan gelöst ist.

Die auf diese Weise erhältliche Feststoffkomponente a) wird zusammen mit weiteren Komponenten, d.h. Aluminiumverbindungen b) und gegebenenfalls Elektronendonorverbindungen c), als Ziegler-Natta-Katalysatorsystem verwendet.

Als Aluminiumkomponente b) kommen neben Trialkylaluminium auch solche Verbindungen in Betracht, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Neben der auf Aluminiumphosphat geträgerten Feststoffkomponente a) und der Aluminiumkomponente b) können die erfindungsgemäßen Katalysatorsysteme bevorzugt ferner noch Elektronendonorverbindungen c) als weitere Komponente enthalten, beispielsweise funktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonoren sind siliciumorganische Verbindungen der Formel II

[R¹ₙSi(OR²)₄₋ₙ] (II)

wobei
R¹ eine C₁- bis C₁₂-Alkylgruppe, eine 5- bis 7-gliedrige Cycloalkylgruppe, die ihrerseits eine C₁- bis C₈-Alkylgruppe tragen kann, oder eine C₆- bis C₁₂-Aryl- oder Arylalkylgruppe, R² eine C₁- bis C₁₂-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan besonders geeignet.

Bevorzugt werden solche Katalysatorsysteme verwendet, bei denen das Atomverhältnis zwischen Aluminium aus der Aluminiumverbindung b) und Titan aus der titanhaltigen Feststoffkomponente a) 10:1 bis 800:1, insbesondere 20:1 bis 200:1, und das Molverhältnis zwischen der Aluminiumverbindung b) und der Elektronendonorverbindung c) 1:1 bis 100:1, insbesondere 2:1 bis 80:1 beträgt.

Mit Hilfe der erfindungsgemäßen Katalysatorsysteme lassen sich Polymerisate von C₂- bis C₁₀-Alk-1-enen herstellen, beispielsweise von Ethylen, Propylen, But-1-en, Pent-1-en, Hex-1-en, Hept-1-en oder Oct-1-en. Das erfindungsgemäße Katalysatorsystem eignet sich dabei insbesondere zur Herstellung von Propylenhomopolymerisaten und Copolymerisaten des Propylens mit untergeordneten Anteilen weiterer C₂- bis C₁₀-Alk-1-ene, insbesondere von Ethylen und But-1-en.

Die Herstellung von Polymerisaten von C₂- bis C₁₀-Alk-1-enen kann in den üblichen, für die Polymerisation von Alk-1-enen verwendeten Reaktoren entweder absatzweise oder bevorzugt kontinuierlich u.a. als Suspensionspolymerisation oder bevorzugt als Gasphasenpolymerisation durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden. Die Reaktionsdauer hängt entscheidend von den jeweils gewählten Polymerisationsbedingungen ab. Sie liegt üblicherweise zwischen 0,2 und 20 Stunden, meistens zwischen 0,5 und 10 Stunden.

Die Polymerisationsreaktion wird zweckmäßigerweise bei Temperaturen von 20 bis 150°C und Drücken von 1 bis 100 bar durchgeführt. Bevorzugt sind dabei Temperaturen von 40 bis 120°C und Drücke von 10 bis 80 bar. Die Molmasse der dabei gebildeten Polyalk-1-ene kann durch Zugabe von in der Polymerisationstechnik gebräuchlichen Reglern, beispielsweise von Wasserstoff kontrolliert werden. Weiterhin ist es möglich, inerte Lösungsmittel wie beispielsweise Toluol oder Hexan, Inertgase wie Stickstoff oder Argon und kleinere Mengen inerter Füllstoffe mitzuverwenden.

Die mit Hilfe des erfindungsgemäßen Katalysatorsystems erhältlichen Polymerisate weisen im allgemeinen Schmelzflußindizes im Bereich von 0,1 bis 500 g/10 min, vorzugsweise im Bereich von 0,2 bis 250 g/min, jeweils gemessen nach DIN 53 735 bei 230°C und 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird.

Das erfindungsgemäße Katalysatorsystem zeichnet sich insbesondere durch eine hohe Produktivität aus. Die mit dessen Hilfe erhältlichen Polymerisate von C₂- bis C₁₀-Alk-1-enen weisen u.a. eine hohe Kristallinität, eine enge Kornverteilung und einen geringen Feinstkornanteil auf.

Aufgrund ihrer guten mechanischen Eigenschaften eignen sich die mit Hilfe des erfindungsgemäßen Katalysatorsystems hergestellten Polymerisate vor allem als Materialien für Folien und Formkörper.

### Beispiele

### Beispiele 1 bis 4

### A. Herstellung der Feststoffkomponente a)

In einer ersten Stufe wurde Aluminiumphosphat, das ein atomares Verhältnis zwischen Aluminium und Phosphat von ca. 1,0, einen Teilchendurchmesser von 20 und 50 µm, ein Porenvolumen von 1,4 cm³/g und eine spezifische Oberfläche von 278 m²/g aufwies, mit einer Lösung von n-Butyloctylmagnesium in n-Heptan versetzt, wobei pro Mol des Aluminiumphosphats 0,25 Mol der Magnesiumverbindung eingesetzt wurden. Die Lösung wurde 45 Minuten bei 40°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 Mol Ethanol pro Mol Magnesium versetzt. Dieses Gemisch wurde 0,5 Stunden bei 80°C gerührt und anschließend mit 7,2 Mol Titantetrachlorid und 0,3 Mol von in Ethylbenzol gelöstem Di-n-butylphthalat jeweils bezogen auf 1 Mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmitel nur noch 0,3 Gew.-% Titantetrachlorid aufwies.

Die titanhaltige Feststoffkomponente enthielt
4,2 Gew.-% Ti
4,7 Gew.-% Mg
21,7 Gew.-% Cl
8,8 Gew.-% Al.

### B. Polymerisation

In einem mit einem Rührer versehenen 10 l-Autoklaven wurde bei einem Druck von 28 bar und einer Temperatur von 70°C Propylen eingeleitet und dieses bei einer mittleren Verweilzeit von 1 Stunde mit Hilfe des erfindungsgemäßen Katalysatorsystems kontinuierlich polymerisiert. Dabei wurden pro 120 mg der nach A hergestellten, mit Aluminiumphosphat geträgerten Feststoffkomponente, 20 mmol Triethylaluminium und 2 mmol Dimethoxyisobutylisopropylsilan verwendet.

Die Produktivität des dabei verwendeten Katalysatorsystems kann ebenso wie die Kristallinität des jeweils erhaltenen Propylenhomopolymerisats (heptanunlösliche Anteile), sowie dessen Schmelzflußindex, dessen Kornverteilung und dessen Schmelzpunkt für alle Beispiele 1 bis 4 der nachfolgenden Tabelle entnommen werden.

**Tabelle**

| | Beispiel | | | |
|---|---|---|---|---|
| | 1 | 2 | 3 | 4 |
| Produktivität (g Polypropylen/g titanhaltige Feststoffkomponente | 9370 | 10480 | 11240 | 10290 |
| Kristallinität/Stereospezifität (heptanunlösliche Anteile) [Gew.-%] | 98,2 | 98,6 | 98,7 | 98,5 |
| Schmelzflußindex* [g/10 min] | 5,7 | 7,1 | 6,7 | 6,3 |
| Kornverteilung [Gew.-%] | | | | |
| < 0,25 mm | 1,8 | 2,2 | 2,1 | 1,9 |
| > 2,0 mm | 4,3 | 5,1 | 2,6 | 3,2 |
| Schmelzpunkt [°C] | 166,5 | 166,6 | 166,1 | 166,3 |

| | | | | |
|---|---|---|---|---|
| * nach DIN 53 735, bei 230°C und unter einem Gewicht von 2,16 kg. | | | | |

Die mit Hilfe des erfindungsgemäßen Katalysatorsystems erhältlichen Propylenhomopolymerisate zeichnen sich insbesondere durch eine hohe Kristallinität, eine enge Korngrößenverteilung, einen geringen Feinstkornanteil und einen hohen Schmelzpunkt aus.

## Patentansprüche

1. Katalysatorsysteme zur Polymerisation von C₂- bis C₁₀-Alk-1-enen, enthaltend als aktive Bestandteile
a) eine Feststoffkomponente auf der Basis einer Verbindung des drei- oder vierwertigen Titans, eines Halogens, einer Elektronendonorverbindung, einer magnesiumhaltigen Verbindung und einem Träger,
b) eine Aluminiumkomponente und
c) gegebenenfalls eine weitere Elektronendonorverbindung,
wobei als Träger in der Feststoffkomponente a) eine Aluminiumphosphatverbindung mit einem atomaren Verhältnis von Aluminium zu Phosphor von 0,5 bis 1,5 verwendet wird.

2. Katalysatorsysteme nach Anspruch 1, enthaltend als Träger eine Aluminiumphosphatverbindung mit einem atomaren Verhältnis von Aluminium zu Phosphor von 0,8 bis 1,2.

3. Katalysatorsysteme nach den Ansprüchen 1 oder 2, enthaltend als Elektronendonorverbindung in der Feststoffkomponente a) ein Phthalsäurederivat der allgemeinen Formel I 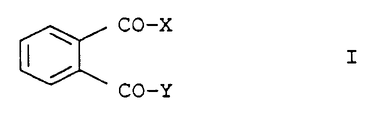 in der X und Y jeweils für ein Chloratom oder einen C₁- bis C₁₀-Alkoxyrest oder gemeinsam für ein Sauerstoffatom stehen.

4. Katalysatorsysteme nach den Ansprüchen 1 bis 3, enthaltend als Aluminiumkomponente b) eine Trialkylaluminiumverbindung, deren Substituenten jeweils 1 bis 8 C-Atome aufweisen.

5. Katalysatorsysteme nach den Ansprüchen 1 bis 4, enthaltend als weitere Elektronendonorverbindung c) eine Siliciumverbindung der allgemeinen Formel II
[R¹ₙSi(OR²)₄₋ₙ] (II)
wobei R¹ für eine C₁- bis C₁₂-Alkylgruppe, eine 5- bis 7-gliedrige Cycloalkylgruppe, die ihrerseits eine C₁- bis C₈-Alkylgruppe tragen kann, oder eine C₆- bis C₁₂-Aryl- oder Arylalkylgruppe steht, R² einer C₁- bis C₁₂-Alkylgruppe entspricht und n für die Zahlen 1, 2 oder 3 steht.

6. Verfahren zur Herstellung der Katalysatorsysteme gemäß den Ansprüchen 1 bis 5, dadurch gekennzeichnet, daß man
a) in einer ersten Stufe die als Träger verwendete Aluminiumphosphatverbindung mit einer Lösung einer magnesiumhaltigen Verbindung in einem flüssigen Alkan bei einer Temperatur zwischen 10 und 120°C versetzt, danach ein Halogen oder einen Halogenwasserstoff in wenigstens 2-fachen molaren Überschuß, bezogen auf die magnesiumhaltige Verbindung, hinzufügt und dieses Gemisch mit einem Halogenid oder einem Alkoholat des 3- oder 4-wertigen Titans sowie einer Elektronendonorverbindung versetzt, wobei man pro Mol Magnesium aus der magnesiumhaltigen Verbindung 1 bis 5 Mol Alkanol, 2 bis 20 Mol des 3- oder 4-wertigen Titans und 0,01 bis 1 Mol der Elektronendonorverbindung verwendet, anschließend den so erhaltenen festen Stoff abfiltriert und mit einem flüssigen Kohlenwasserstoff wäscht,
b) dann in einer zweiten Stufe den in der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel extrahiert und anschließend so lange mit einem flüssigen Alkan wäscht, bis der Gehalt der Waschflüssigkeit an Titantetrachlorid weniger als 2 Gew.-% beträgt, und die dadurch erhaltene Feststoffkomponente a) anschließend mit der Aluminiumkomponente b) und gegebenenfalls mit der weiteren Elektronendonorverbindung c) vereinigt.

7. Verfahren zur Herstellung von Polymerisaten von C₂- bis C₁₀-Alk-1-enen bei Temperaturen von 20 bis 150°C und Drücken von 1 bis 100 bar, dadurch gekennzeichnet, daß man hierzu Katalysatorsysteme gemäß den Ansprüchen 1 bis 5 verwendet.

## Claims

1. A catalyst system for the polymerization of C₂-C₁₀-alk-1-enes, containing, as active components,
a) a solid component based on a compound of trivalent or tetravalent titanium, a halogen, an electron donor compound, a magnesium-containing compound and a carrier,
b) an aluminum component and
c) if required, a further electron donor compound, the carrier used in the solid component a) being an aluminum phosphate compound having an atomic ratio of aluminum to phosphorus of from 0.5 : 1 to 1.5 : 1.

2. A catalyst system as claimed in claim 1, containing, as the carrier, an aluminum phosphate compound having an atomic ratio of aluminum to phosphorus of from 0.8 : 1 to 1.2 : 1.

3. A catalyst system as claimed in claim 1 or 2, containing, as the electron donor compound in the solid component a), a phthalic acid derivative of the formula I 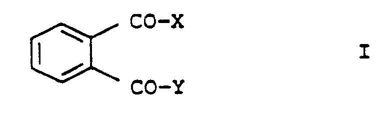 where X and Y are each chlorine or C₁-C₁₀-alkoxy or together form an oxygen atom.

4. A catalyst system as claimed in any of claims 1 to 3, containing, as aluminum component b), a trialkylaluminum compound whose substituents are each of 1 to 8 carbon atoms.

5. A catalyst system as claimed in any of claims 1 to 4, containing, as further electron donor compound c), a silicon compound of the formula II
[R¹ₙSi(OR²)₄₋ₙ] (II)
where R¹ is C₁-C₁₂-alkyl, 5-membered to 7-membered cycloalkyl, which in turn may carry C₁-C₈-alkyl, or C₆-C₁₂-aryl or arylalkyl, R² is C₁-C₁₂-alkyl and n is 1, 2 or 3.

6. A process for the preparation of a catalyst system as claimed in any of claims 1 to 5, wherein
a) in a first stage, a solution of a magnesium-containing compound in a liquid alkane is added, at from 10 to 120°C, to the aluminum phosphate compound used as the carrier, a halogen or a hydrogen halide in at least a two-fold molar excess, based on the magnesium-containing compound, is then added and a halide or an alcoholate of trivalent or tetravalent titanium and an electron donor compound are then added to this mixture, from 1 to 5 mol of alkanol, from 2 to 20 mol of the trivalent or tetravalent titanium and from 0.01 to 1 mol of the electron donor compound being used per mol of magnesium from the magnesium-containing compound, and the solid substance thus obtained is then filtered off and is washed with a liquid hydrocarbon, and
b) then, in a second stage, the solid obtained in the first stage is extracted for a few hours at from 100 to 150°C with excess titanium tetrachloride or with a solution of titanium tetrachloride in an inert solvent, which solution is present in excess, and is then washed with a liquid alkane until the titanium tetrachloride content of the wash liquid is less than 2% by weight, and the solid component a) thus obtained is then combined with the aluminum component b) and, if required, with the further electron donor compound c).

7. A process for the preparation of polymers of C₂-C₁₀-alk-1-enes at from 20 to 150°C and from 1 to 100 bar, wherein a catalyst system as claimed in any of claims 1 to 5 is used for this purpose.

## Revendications

1. Système catalyseur pour la polymérisation d'alc-1-ènes en C₂-C₁₀, comprenant comme composants actifs
a) un composant solide à base d'un composé du titane tri- ou tétravalent, d'un halogène, d'un composé donneur d'électrons, d'un composé contenant du magnésium et d'un support,
b) un composant d'aluminium et
c) éventuellement un autre composé donneur d'électrons,
dans lequel on utilise, comme support dans le composant solide a), un phosphate d'aluminium ayant un rapport atomique de l'aluminium au phosphore de 0,5 à 1,5.

2. Système catalyseur selon la revendication 1, comportant comme support un phosphate d'aluminium ayant un rapport atomique de l'aluminium au phosphore de 0,8 à 1,2.

3. Système catalyseur selon l'une ou l'autre des revendications 1 et 2, contenant comme composé donneur d'électrons dans le composant solide a), un dérivé d'acide phtalique de formule générale I 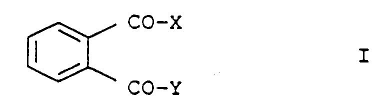 dans laquelle X et Y représentent chacun un atome de chlore ou un reste alcoxy en C₁-C₁₀ ou représentent ensemble un atome d'oxygène.

4. Système catalyseur selon l'une quelconque des revendications 1 à 3, contenant comme composant d'aluminium b) un dérivé de trialkylaluminium dont les substituants présentent chacun de 1 à 8 atomes de carbone.

5. Système catalyseur selon l'une quelconque des revendications 1 à 4, contenant comme autre composé donneur d'électrons c) un dérivé du silicium de formule générale II
[R¹ₙSi(OR²)₄₋ₙ] (II)
dans laquelle R¹ représente un groupement alkyle en C₁-C₁₂, un groupement cycloalkyle à 5-7 chaînons qui peut lui-même porter un groupement alkyle en C₁-C₈, ou un groupement aryle ou arylalkyle en C₆-C₁₂, R² représente un groupement alkyle en C₁-C₁₂ et n représente le nombre 1, 2 ou 3.

6. Procédé de préparation du système catalyseur selon l'une quelconque des revendications 1 à 5, caractérisé en en ce que :
a) dans une première étape, on fait réagir le dérivé de phosphate d'aluminium utilisé comme support avec une solution d'un composé contenant du magnésium dans un alcane fluide à une température comprise entre 10 et 120°C, puis on ajoute un halogène ou un hydracide halogéné en excès au moins 2 fois molaire par rapport au composé contenant du magnésium et on fait réagir ce mélange avec un halogénure ou un alcoolate de titane tri- ou tétravalent ainsi qu'avec un composé donneur d'électrons, en utilisant, par mole de magnésium du composé contenant du magnésium, 1 à 5 mole d'alcanol, 2 à 20 moles de titane tri- ou tétravalent et 0,01 à 1 mole du composé donneur d'électrons, on recueille ensuite par filtration le produit solide ainsi obtenu et on le lave avec un hydrocarbure liquide,
b) puis dans une deuxième étape de réaction, on extrait le produit obtenu dans la première étape, pendant quelques heures à des températures comprises entre 100 et 150°C, avec du tétrachlorure de titane en excès ou avec une solution introduite en excès de tétrachlorure de titane dans un solvant inerte puis on le lave avec un alcane liquide jusqu'a ce que la teneur du produit de lavage en tétrachlorure de titane devienne inférieure à 2% en poids, et ensuite on combine le composant solide a) ainsi obtenu avec le composant d'aluminium b) et éventuellement avec l'autre composé donneur d'électrons c).

7. Procédé de préparation de polymères d'alc-1-ènes en C₂-C₁₀ à des températures de 20 à 150°C et des pressions de 1 à 100 bars, caractérisé en ce qu'on y utilise un système catalyseur selon l'une quelconque des revendications 1 à 5.
